# EUROPEAN PATENT APPLICATION

(11) **EP 4 811 518 A1**
(43) Date of publication of application: **23.09.2026**
(21) Application number: 25165048.7
(22) Date of filing: 20.03.2025
(51) Int. Cl.: H01M 50/242, H01M 50/249, B60K 1/04

(54) **BATTERY ARRANGEMENT WITH ELASTOMERIC BUSHINGS BETWEEN A PROTECTION PLATE AND BATTERY MODULES**

(71) Applicant: Volvo Truck Corporation, 405 08 Göteborg (SE)
(72) Inventor: LANDVIK, Sondre, 417 61 GÖTEBORG (SE); IOANA, Albert, 417 27 GÖTEBORG (SE)
(74) Representative: Kransell & Wennborg KB

(57) **Abstract**

The disclosure relates to a battery arrangement (100) for a vehicle, comprising a pair of battery modules (102, 202) arranged, wherein each of the battery modules comprises a battery suspension element (104, 204) configured to individually suspend the respective battery module to a frame (300) of the vehicle, a protection plate (400) extending across a geometric gap (103) between the battery modules and arranged at a first surface (106, 206) of each of the battery modules, the first surface being arranged laterally offset from the battery suspension elements of the battery modules, and a pair of bushings (108, 208), each arranged between the protection plate and the first surface of the pair of battery modules, connecting the protection plate to the respective battery module, wherein each of the pair of bushings is formed by an elastomeric material to allow a relative movement between the protection plate and the battery modules.

## Description

### TECHNICAL FIELD

The disclosure relates generally to battery arrangements. In particular aspects, the disclosure relates to a battery arrangement with bushings that allow relative movement between a protection plate and battery modules. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric traction motors have been increasingly popular, both for cars as well as for trucks and other heavy duty vehicles.

Heavy-duty vehicles, such as e.g. trucks, operate under demanding conditions where the frames can be exposed to twisting and flexing. This frame deformation occurs naturally due to uneven terrain and heavy loads. Rigidly mounting components to the frame, such as battery systems, can result in structural stress, component misalignment, or premature wear. Additionally, traditional mounting solutions may complicate maintenance and replacement, leading to increased servicing time and reduced operational efficiency. There is thus a need for a battery installation system that accommodates frame flexing while ensuring secure mounting and ease of serviceability.

### SUMMARY

According to a first aspect of the disclosure, there is provided a battery arrangement for a vehicle, the battery arrangement comprising: a pair of battery modules arranged side by side and spaced apart from each other by a geometric gap, wherein each of the battery modules comprises a battery suspension element configured to individually suspend the respective battery module to a frame of the vehicle, a protection plate extending across the geometric gap and arranged at a first surface of each of the battery modules, the first surface being arranged laterally offset from the battery suspension elements of the battery modules, and a pair of bushings, each bushing of the pair of bushings being arranged between the protection plate and the first surface of a respective one of the pair of battery modules, connecting the protection plate to the respective battery module, wherein each of the pair of bushings is formed by an elastomeric material to allow a relative movement between the protection plate and the battery modules. The first aspect of the disclosure may seek to provide a secure and flexible mounting solution for battery modules in a vehicle, allowing controlled movement to compensate for frame twisting while still ensuring structural stability and protection. Traditional rigid mounting systems may introduce excessive stress on the battery modules due to frame deformations, potentially leading to mechanical failures or reduced durability. By incorporating suspension elements, a protection plate, and elastomeric bushings, the battery arrangement may help reduce stress, improve impact resistance as well as serviceability while maintaining a reliable battery module installation. A technical benefit may include that controlled movement of the battery modules relative to the frame is allowed, which may help reduce stress caused by frame twisting and improve durability and reliability. The use of elastomeric bushings between the protection plate and the battery modules may further absorb vibrations and impacts, improving mechanical resilience and crash protection. Additionally, extending the protection plate across the geometric gap may distribute external loads more effectively and protect the battery modules from, for example, side impacts. Furthermore, individually suspending each battery module to the frame may enable easier installation and replacement, improving serviceability and reducing maintenance time.

The geometric gap refers to the space between the pair of battery modules in the longitudinal direction of the vehicle. The geometric gap may serve multiple functional purposes, including allowing relative movement between the battery modules, reducing stress transmission, and simplifying serviceability by enabling the individual removal of a battery module without requiring the removal of other battery modules. The geometric gap may take different forms depending on design and operational requirements. In some examples, the gap may be a uniform air gap, maintaining a spacing between the battery modules to prevent direct contact while allowing for limited independent movement. In other examples, the gap may be tapered or variable, where the distance between the battery modules changes along the length or height, enabling mounting variations or frame deformation allowances. The gap may also be filled with a flexible or compressible material, such as an elastomer, to provide vibration damping while still permitting controlled displacement. In some examples, the gap may be configured as a ventilated space, allowing airflow or coolant circulation for thermal management of the battery modules.

Optionally in some examples, including in at least one preferred example, each bushing of the pair of bushings is configured to allow a larger relative movement between the protection plate and the battery modules in a vertical direction than in a longitudinal direction. A technical benefit may include that a larger relative movement in the vertical direction can be allowed which reduces shear forces at the frame interface and minimizes joint stress, improving durability. Additionally, the increased vertical flexibility of the bushings may help to allow frame twisting without transferring excessive forces into the battery packs.

Optionally in some examples, including in at least one preferred example, at least one bushing of the pair of bushings has an elongated shape with a greater dimension extending in the longitudinal direction than in the vertical direction. A technical benefit may include that designing the bushing with an elongated shape may provide directional stiffness, which may improve stability in the longitudinal direction while permitting controlled vertical flexibility. The increased longitudinal dimension of the bushing may reduce the risk of bolt slippage and weld failures caused by excessive forces acting in the longitudinal direction.

Optionally in some examples, including in at least one preferred example, at least one bushing of the pair of bushings has an oval shape with a major axis extending in the longitudinal direction and a minor axis extending in the vertical direction. A technical benefit may include that arranging the bushing with an oval shape may provide stiffness distribution that allows controlled vertical movement while maintaining structural rigidity in the longitudinal direction. The increased longitudinal dimension of the oval bushing may contribute to durability and reduced mechanical stress on mounting points.

Optionally in some examples, including in at least one preferred example, at least one bushing of the pair of bushings comprises an asymmetrical internal structure, such that the stiffness of the bushing is greater in the longitudinal direction than in the vertical direction. A technical benefit may include that the asymmetrical internal structure may allow the bushing to primarily absorb vertical displacements while limiting longitudinal deflection. The increased stiffness in the longitudinal direction may reduce the impact of forces caused by e.g. acceleration and braking.

Optionally in some examples, including in at least one preferred example, at least one bushing of the pair of bushings comprises internal voids or cavities arranged to reduce stiffness in the vertical direction while restricting deformation in the longitudinal direction. A technical benefit may include that internal voids or cavities may provide flexibility, which may contribute to energy absorption while maintaining longitudinal stiffness. The reduced vertical stiffness of the bushing may limit road-induced vibrations transferred to the battery modules. Also, internal voids or cavities additionally reduces the material consumption of the bushing.

Optionally in some examples, including in at least one preferred example, at least one bushing of the pair of bushings comprises at least one reinforcing rib or layer extending in the longitudinal direction to limit deformation in the longitudinal direction. A technical benefit may include that the bushing may allow for stiffness in the longitudinal direction, which may reduce movement of the battery modules during acceleration and braking.

Optionally in some examples, including in at least one preferred example, each of the pair of bushings is positioned at the same location in the lateral direction between the crash shield and the respective battery module. A technical benefit may include that a uniform force distribution may be provided, which may reduce localized stress and may contribute to balanced suspension across the battery modules.

Optionally in some examples, including in at least one preferred example, each bushing of the pair of bushings is positioned in the vicinity of a vertical edge located at a longitudinal end of the respective battery module. By locating the bushings close to the vertical edges at the longitudinal ends, a technical benefit may include that load transfer may be improved, which may minimize stress concentrations and reduce the risk of frame deformation that can affect the battery module.

Optionally in some examples, including in at least one preferred example, wherein each of the pair of bushings is positioned along the first surface at a distance from a vertical edge located at a longitudinal end of the respective battery module. Positioning the bushings away from the vertical edges may allow for load distribution across the battery module, which may limit bending stress at mounting points.

Optionally in some examples, including in at least one preferred example, each of the pair of bushings is positioned at a longitudinal center of the first surface of the respective battery module. A technical benefit may include that centrally positioning the bushings may allow for balanced load distribution across the battery module, which may result in resistance to torsional forces and alignment under various driving conditions.

Optionally in some examples, including in at least one preferred example, at least one of the battery suspension elements comprises a chassis bushing configured to be connected between the respective battery module and the frame of the vehicle. A technical benefit may include that the battery modules may be isolated from frame vibrations and frame twistin, which may prevent stress initiation.

Optionally in some examples, including in at least one preferred example, the chassis bushing is configured to be connected between an upper portion of the respective battery module and the frame of the vehicle. Placing the chassis bushing at the upper portion may provide the technical benefit of allowing for improved load distribution, which may contribute to a reduced level of torsional forces acting on the battery module during vehicle operation.

Optionally in some examples, including in at least one preferred example, at least one of the battery suspension elements comprises an S-shaped spring member configured to flexibly connect the respective battery module to the frame of the vehicle. A technical benefit may include that an S-shaped spring member may provide a semi-rigid suspension system, which may allow for flexibility and structural support. The flexibility of the S-shaped spring member may allow for frame twisting while securing the attachment of the battery module.

Optionally in some examples, including in at least one preferred example, the S-shaped spring member is configured to provide a semi-rigid connection that allows limited movement of the battery module relative to the frame of the vehicle. A technical benefit may include that the S-shaped spring member may allow for controlled flexibility, thereby limiting forces on battery attachment points.

Optionally in some examples, including in at least one preferred example, each of the battery modules comprises at least one pair of battery suspension elements. A technical benefit may include that at least one battery suspension element per battery module may contribute to improved stability, which in turn may reduce the risk of stress concentrations.

Optionally in some examples, including in at least one preferred example, the pair of battery suspension elements is longitudinally spaced apart from each other. A technical benefit may include that an improved force distribution in the longitudinal direction may be obtained. Hereby, a reduced risk of stress concentrations may in turn be obtained.

Optionally in some examples, including in at least one preferred example, each of the battery modules has an L-shaped cross-section. A technical benefit may include that packaging efficiency within the vehicle frame may contribute to optimized space utilization. In particular, using an L-shaped cross-section may enable the battery modules to be arranged both outside and beneath the vehicle frame. The L-shaped cross-section of the battery module may allow for long-range capability and durability.

According to a second aspect, there is provided a vehicle comprising the battery arrangement according to any one of the examples described above in relation to the first aspect.

Optionally in some examples, including in at least one preferred example, the frame comprises a pair of longitudinally extending frame rails, the battery arrangement being suspended from one of the pair of longitudinally extending frame rails.

Effects and features of the second aspect are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a battery arrangement according to an example,
Figs. 3A - 3C are exemplary illustrations of bushings according to examples,
Fig. 4 is an exemplary illustration of motions exposed to the battery arrangement according to an example, and
Fig. 5 is an exemplary illustration of a battery suspension element according to an example.

### DETAILED DESCRIPTION

The detailed description set forth below provides information and examples of the disclosed technology with sufficient detail to enable those skilled in the art to practice the disclosure.

The following described disclosure may seek to provide a secure and flexible mounting solution for battery modules in a vehicle, allowing controlled movement to compensate for frame twisting while still ensuring structural stability and protection. A technical benefit may include that controlled movement of the battery modules relative to the frame is allowed, which may help reduce stress caused by frame twisting and improve durability and reliability.

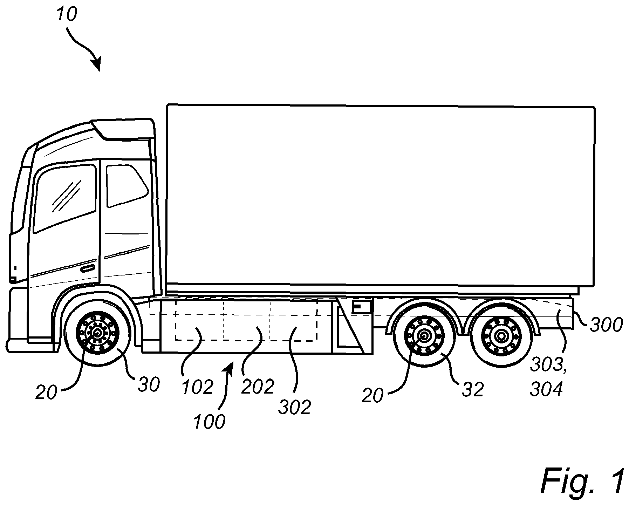

With reference to Fig. 1 which is an exemplary illustration of a vehicle 10 according to an example. The exemplified vehicle 10 is configured to be at least partly propelled by one or more electric traction motors 20. In Fig. 1, the electric traction motors 20 are exemplified as wheel hub motors connected to the pair of front wheels 30 as well as to the foremost pair of rear wheels 32. However, the vehicle 10 may alternatively comprise a single electric traction motor connected to the wheels via a conventional propulsion shaft (not shown). The at least one electric traction motor 20 is configured to apply propulsive power to the wheels of the vehicle during propulsion, and to generate electric power during braking.

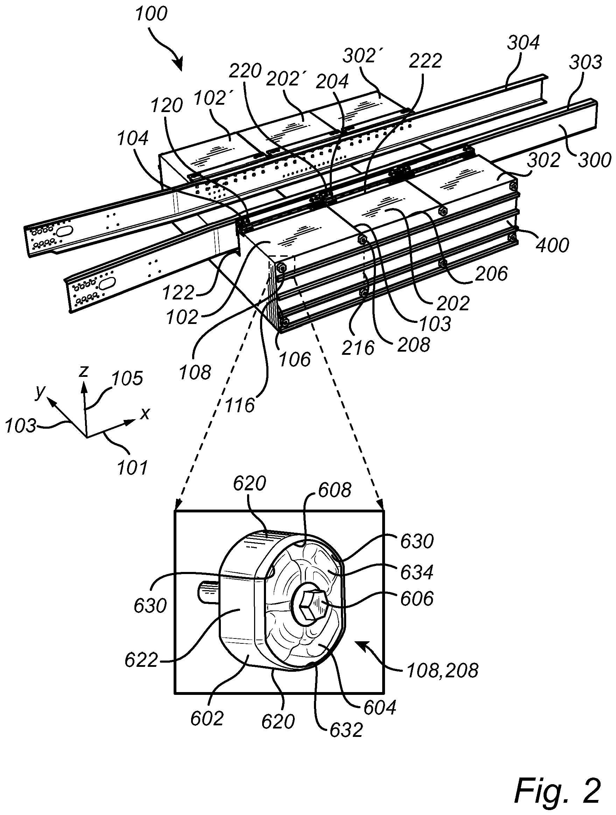

The vehicle further comprises a battery arrangement 100. The battery arrangement 100 comprises at least two traction batteries 102, 202, 302 configured to feed electric power to the electric traction motor 20 during propulsion of the vehicle 10 and to receive electric power during braking. The battery arrangement 100 in Fig. 1 is exemplified as comprising three traction batteries arranged side by side along a longitudinal direction of the vehicle 10. The traction batteries are suspended from a pair of longitudinally extending frame rails 303, 304 of the vehicle 10 by means of a respective battery suspension element (104, 204 illustrated in e.g. Fig. 2). The pair of longitudinally extending frame rails 303, 304, which are illustrated in further detail in e.g. Fig. 2 preferably extends in the longitudinal direction of the vehicle 10. In order to describe the battery arrangement 100 in further detail, reference is now made to Fig. 2.

Fig. 2 is an exemplary illustration of the battery arrangement 100 according to an example. The battery arrangement 100 comprises a number of battery modules 102, 202, 302. In particular, the exemplified battery arrangement 100 in Fig. 2 comprises a first 102, 102', a second 202, 202' and a third 302, 302' battery module on a respective side of the pair of longitudinally extending frame rails 303, 304 of the vehicle 10. In detail, the exemplified battery arrangement 100 comprises three battery modules 102, 202, 302 on first lateral side of a first longitudinally extending frame rail 303, and a further three battery modules 102', 202', 302' on second lateral side of a second longitudinally extending frame rail 304. Each of the battery modules 102, 102', 202, 202', 302, 302' may have an L-shaped cross-section, where a battery module arranged at the first lateral side of the first longitudinally extending frame rail 303 is connected to a corresponding battery module arranged at the second lateral side of the second longitudinally extending frame rail 304. Hence, a first battery module 102 suspended to the first frame rail 303 is connected to a first battery module 102' suspended to the second frame rail 304. To simplify for the skilled reader, the following will describe the battery arrangement 100 with reference to the first 102 and second 202 battery modules suspended from the first frame rail 303. The first 102 and second 202 battery modules will also be referred to as a pair of battery modules 102, 202.

As can be seen in Fig. 2, the pair of battery modules 102, 202 are arranged side by side and spaced apart by a geometric gap 103. The geometric gap 103 refers to the space between the battery modules 102, 202 in the longitudinal direction 101 of the vehicle 10. The geometric gap 103 may provide clearance to prevent direct contact between the battery modules while allowing limited independent movement. In some examples, the geometric gap 103 may be a uniform air gap, maintaining a consistent spacing between the battery modules. In other examples, the geometric gap 103 may be variable, where the distance between the battery modules can change along the length or height. The geometric gap 103 may also be filled with a flexible or compressible material, such as an elastomer, to provide vibration damping while still permitting controlled displacement.

Further, each battery module 102, 202 comprises a battery suspension element 104, 204. The battery suspension element 104, 204 is configured to individually suspend the respective battery module to the frame 300 of the vehicle 10. Individually suspended should be construed to mean that the pair of battery modules 102, 202 are not directly suspended to each other. However, as indicated above, the geometric gap 103 may optionally contain a flexible or compressible material that provides a limited connection between the battery modules 102, 202. At least one of the battery suspension elements 104, 204 may comprise a chassis bushing 120, 220. The chassis bushing 120, 220 is preferably configured to be connected between the respective battery module 102, 202 and the frame 300 of the vehicle 10. According to an example, the chassis bushing 120, 220 may be configured to be connected between an upper portion 122, 222 of the respective battery module 102, 202 and the frame 300 of the vehicle 10. Additionally, each of the battery modules 102, 202 may comprise at least one pair of battery suspension elements 104, 204. The pair of battery suspension elements 104, 204 may be longitudinally spaced apart from each other. Hence, each battery module may be suspended from the frame by the pair of battery suspension elements 104, 204.

Furthermore, the battery arrangement comprises a protection plate 400. The protection plate 400 is arranged at a first surface 106, 206 of each of the battery modules 102, 202, which first surface 106, 206 is laterally offset from the battery suspension elements 104, 204 described above. Hence, the first surface 106, 206 is exemplified as the lateral end surface of the battery modules 102, 202. The protection plate 400 is connected to the pair of battery modules 102, 202 by bushings, referred to in the following as a pair of bushings 108, 208, wherein the protection plate 400 extends across the geometric gap 103. It should thus be construed that the connection of the protection plate 400 to both battery modules 102, 202 does not imply that the battery modules 102, 202 are structurally dependent on each other for suspension.

The pair of bushings 108, 208 is thus positioned between the protection plate 400 and the first surface 106, 206 of the respective battery modules 102, 202, connecting the protection plate 400 to each of the battery modules 102, 202. The bushings 108, 208 are formed by an elastomeric material, allowing relative movement between the protection plate 400 and the battery modules 102, 202. In detail, each bushing 108, 208 may be configured to allow a larger relative movement between the protection plate 400 and the battery modules 102, 202 in a vertical direction 105 than in a longitudinal direction 101. The bushings 108, 208 may be positioned at the same location in the lateral direction 103 between the protection plate 400 and the respective battery module 102, 202. Each bushing 108, 208 may also be positioned in the vicinity of a vertical edge 116, 216 located at a longitudinal end of the respective battery module 102, 202 as depicted in Fig. 2. Additionally or alternatively, although not depicted in Fig. 2, each of the pair of bushings 108, 208 may be positioned along the first surface 106, 206 at a distance from a vertical edge 116, 216 of the respective battery module 102, 202. In some examples, each of the pair of bushings 108, 208 may be positioned at a longitudinal center of the first surface 106, 206 of the respective battery module 102, 202.

As can be seen in the enlarged illustration in Fig. 2, an exemplified bushing 108, 208 is depicted. The exemplified bushing 108, 208 is configured to allow a larger relative movement between the protection plate 400 and the battery modules 102, 202 in a vertical direction 105 than in a longitudinal direction 101. The exemplified bushing 108, 208 in Fig. 2 comprises a first part 602 and a second part 604. The first 602 and second 604 parts are thus separate parts, preferably made from different materials. According to an example, the first part 602 is made from a plastic material while the second part 604 is made from an elastomeric material, such as a rubber. The exemplified bushing 108, 208 is thus formed by an elastomeric material. The second part 604 is arranged in a central cavity 608 of the first part 602. Preferably, the second part 604 is prevented from any substantial axial, radial and rotation displacement relative to the first part 602. A fastening element 606 such as a screw or a bolt is arranged through the second part and arranged to attach the bushing 108, 208 to the corresponding battery module. In detail, the fastening element 606 is preferably arranged through a through hole of the second part 604.

The first part 602 is exemplified as having an oblong shaped portion. The first part 602 comprises a pair of semi-circular surfaces 620 and a pair of straight surfaces 622. Each of the straight surfaces 622 is arranged between the pair of semi-circular surfaces 620. The second part comprises an abutment portion 630. The abutment portion 630 is arranged in abutment with a surface 632 of the first part 602. In particular, the surface 632 of the first part 602 is an inner surface arranged in the cavity 608 of the first part 602. The inner surface may be arranged in an oblong shape with a pair of semi-circular portions and a pair of straight portions. Also, and as illustrated, the abutment portion 630 may be arranged on a radially protruding portion 634 of the second portion 604. The second portion 604 is exemplified as comprising four radially protruding portion 634 forming a four leaf clover shape.

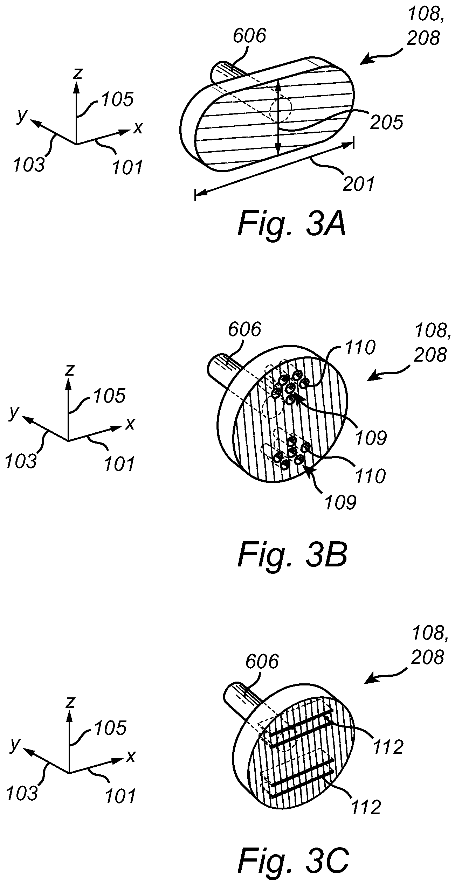

Reference is now made to Figs. 3A - 3C for describing alternative examples of the bushing 108, 208. Starting with Fig. 3A which is an exemplary illustration of a bushing according to an example. In a similar vein as for the description of Fig. 2, the exemplified bushing 108, 208 in Fig. 3A is arranged between the protection plate 400 and the first surface 106, 206 of the respective battery module 102, 202, thereby connecting the protection plate 400 to the corresponding battery module 102, 202. The bushing 108, 208 is formed by an elastomeric material and is configured to allow a larger relative movement between the protection plate 400 and the battery modules 102, 202 in a vertical direction 105 than in a longitudinal direction 101. As depicted in Fig. 3A, the exemplified bushing 108, 208 has an elongated shape, i.e. a greater dimension extending in the longitudinal direction 101 than in the vertical direction 105. The elongated shape may thus contribute to limiting movement in the longitudinal direction 101 while still permitting controlled displacement in the vertical direction 105. Hereby, directional stiffness can be provided that results in a greater resistance to forces acting along the longitudinal direction 101 compared to forces acting along the vertical direction 105. The exemplified bushing 108, 208 in Fig. 3A has an oval shape, where the bushing 108, 208 comprises a major axis 201 extending in the longitudinal direction 101 and a minor axis 205 extending in the vertical direction 105. The major axis 201 is thus longer than the minor axis 205.

Further, the bushing 108, 208 may be rotationally aligned with the protection plate 400 and the first surface 106, 206 of the respective battery module 102, 202 such that the major axis 201 is parallel to the longitudinal direction 101 and the minor axis 205 is parallel to the vertical direction 105. This orientation may provide a predictable response to forces acting on the bushing 108, 208, thereby controlling the relative movement between the protection plate 400 and the battery modules 102, 202.

Turning to Fig. 3B which is another example of the bushing 108, 208. In a similar vein as the previous discussion, the bushing 108, 208 exemplified in Fig. 3B is also arranged between the protection plate 400 and the first surface 106, 206 of the respective battery module 102, 202, thereby connecting the protection plate 400 to the battery module 102, 202. The bushing 108, 208 is formed from an elastomeric material and allows a larger relative movement between the protection plate 400 and the battery modules 102, 202 in a vertical direction 105 than in a longitudinal direction 101.

As depicted in Fig. 3B, the bushing 108, 208 comprises an asymmetrical internal structure 109. The asymmetrical internal structure 109 may result in the bushing 108, 208 exhibiting greater stiffness in the longitudinal direction 101 than in the vertical direction 105. The difference in stiffness may hence provide directional control of the movement of the battery modules 102, 202 relative to the protection plate 400. The asymmetrical internal structure 109 may be achieved by varying the geometry, material distribution, or density within different sections of the bushing 108, 208.

Fig. 3B further illustrates that the bushing 108, 208 may include internal voids or cavities 110. The internal voids or cavities 110 may form the above described asymmetrical internal structure. The internal voids or cavities 110 may be arranged to reduce stiffness in the vertical direction 105 while restricting deformation in the longitudinal direction 101. By incorporating internal voids or cavities 110, the bushing 108, 208 may allow increased displacement in response to vertical loads while maintaining resistance to forces acting along the longitudinal direction 101.

Turning now to Fig. 3C which is another example of the bushing 108, 208. In a similar vein as the previous discussion, the bushing 108, 208 exemplified in Fig. 3C is also arranged between the protection plate 400 and the first surface 106, 206 of the respective battery module 102, 202, thereby connecting the protection plate 400 to the battery module 102, 202. The bushing 108, 208 is formed from an elastomeric material and allows a larger relative movement between the protection plate 400 and the battery modules 102, 202 in a vertical direction 105 than in a longitudinal direction 101.

As can be seen in Fig. 3C the exemplified bushing 108, 208 comprises at least one reinforcing rib or layer 112. The reinforcing rib or layer 112 may extend in the longitudinal direction 101 and may be arranged to limit deformation of the bushing 108, 208 along the longitudinal direction 101. By reinforcing the bushing 108, 208 in this manner, the ability of the bushing 108, 208 to resist forces acting along the longitudinal direction 101 may be increased while still permitting controlled displacement in the vertical direction 105.

The reinforcing rib or layer 112 may be integrated within the structure of the bushing 108, 208 or may be an additional component secured to the bushing 108, 208. According to an example, the reinforcing rib or layer 112 may be made from a more rigid material than the surrounding elastomeric material, such as a fiber-reinforced polymer or a metal insert. The inclusion of the reinforcing rib or layer 112 may contribute to the asymmetrical stiffness of the bushing 108, 208.

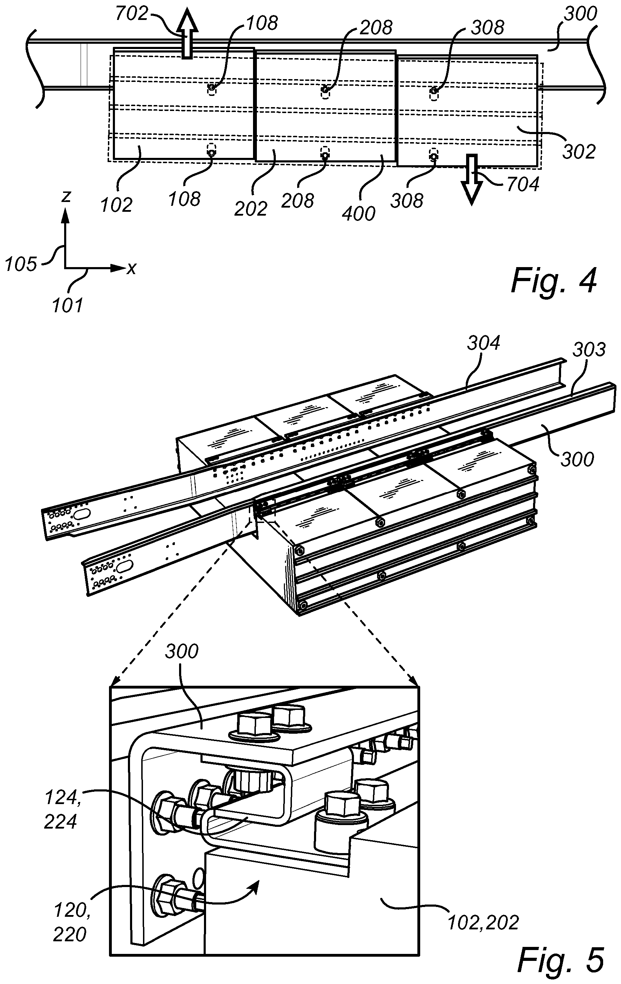

Reference is now made to Fig. 4 which is an exemplary illustration of motions exposed to the battery arrangement according to an example. During operation of the vehicle 10, the frame 300 can be exposed to frame twisting. As can be seen in Fig. 4, the first 102, second 202 and third 302 battery modules are hereby vertically displaced relative to each other. In the example, the first battery module 102 is located at a higher vertical position than the second battery module 202. The second battery module 202 is in turn located at a higher vertical position than the third battery module 302. In Fig. 4, this is illustrated by arrow 702 illustrating the upward motion of the first battery module 102 and arrow 704 illustrating the downward motion of the third battery module 302. Using the bushings 108, 208 of anyone of the above examples described above in relation to Figs. 2, 3A, 3B and 3C, the protection plate 400 will follow the relative motion by the battery modules without e.g. being deformed. The protection plate 400 when connected to the battery modules using the bushings will also allow the relative motion of the battery modules, i.e. not put a substantial restriction to this relative movement.

Turning to Fig. 5 which is an exemplary illustration of a battery suspension element according to an example. As described above, each battery module 102, 202 comprises at least one battery suspension element 104, 204, which is configured to individually suspend the respective battery module 102, 202 to the frame 300 of the vehicle 10. In the example depicted in Fig. 5, at least one of the battery suspension elements 104, 204 comprises an S-shaped spring member 124, 224. The S-shaped spring member 124, 224 may be arranged between the battery module 102, 202 and the frame 300 and may provide a flexible connection allowing limited movement of the battery module 102, 202 relative to the frame 300. The S-shaped geometry may allow the spring member 124, 224 to absorb displacement and deformation resulting from external loads, such as frame twisting or road-induced vibrations.

The S-shaped spring member 124, 224 may be configured to provide a semi-rigid connection, which permits flexibility and support for the battery module 102, 202. The S-shaped spring member 124, 224 may enable the battery module 102, 202 to move in response to external forces while preventing excessive displacement. Further, the S-shaped spring member 124, 224 may be formed from a resilient material, such as spring steel, a composite material, or an elastomer-reinforced structure, depending on the required flexibility and load-bearing capacity.

### EXAMPLE LIST

Example 1. A battery arrangement (100) for a vehicle (10), the battery arrangement comprising: a pair of battery modules (102, 202) arranged side by side and spaced apart from each other by a geometric gap (103), wherein each of the battery modules comprises a battery suspension element (104, 204) configured to individually suspend the respective battery module to a frame (300) of the vehicle, a protection plate (400) extending across the geometric gap and arranged at a first surface (106, 206) of each of the battery modules, the first surface being arranged laterally offset from the battery suspension elements (104, 204) of the battery modules, and a pair of bushings (108, 208), each bushing of the pair of bushings being arranged between the protection plate and the first surface of a respective one of the pair of battery modules, connecting the protection plate to the respective battery module, wherein each of the pair of bushings (108, 208) is formed by an elastomeric material to allow a relative movement between the protection plate and the battery modules.

Example 2. The battery arrangement of example 1, wherein each bushing of the pair of bushings (108, 208) is configured to allow a larger relative movement between the protection plate and the battery modules in a vertical direction (105) than in a longitudinal direction (101).

Example 3. The battery arrangement of example 2, wherein at least one bushing of the pair of bushings (108, 208) has an elongated shape with a greater dimension extending in the longitudinal direction (101) than in the vertical direction (105).

Example 4. The battery arrangement of any one of examples 2 - 3, wherein at least one bushing of the pair of bushings (108, 208) has an oval shape with a major axis (201) extending in the longitudinal direction (101) and a minor axis (205) extending in the vertical direction (105).

Example 5. The battery arrangement of any one of examples 2 - 4, wherein at least one bushing of the pair of bushings (108, 208) comprises an asymmetrical internal structure (109), such that the stiffness of the bushing is greater in the longitudinal direction (101) than in the vertical direction (105).

Example 6. The battery arrangement of example 5, wherein at least one bushing of the pair of bushings (108,208) comprises internal voids or cavities (110) arranged to reduce stiffness in the vertical direction (105) while restricting deformation in the longitudinal direction (101).

Example 7. The battery arrangement of any one of examples 5 or 6, wherein at least one bushing of the pair of bushings (108, 208) comprises at least one reinforcing rib or layer (112) extending in the longitudinal direction (101) to limit deformation in the longitudinal direction.

Example 8. The battery arrangement of any one of the preceding examples, wherein each of the pair of bushings (108, 208) is positioned at the same location in the lateral direction (103) between the crash shield (400) and the respective battery module (102, 202).

Example 9. The battery arrangement of any one of the preceding examples, wherein each bushing of the pair of bushings is positioned in the vicinity of a vertical edge (116, 216) located at a longitudinal end of the respective battery module (102, 202).

Example 10. The battery arrangement of any one of the preceding examples, wherein each of the pair of bushings (108, 208) is positioned along the first surface (106, 206) at a distance from a vertical edge located at a longitudinal end of the respective battery module.

Example 11. The battery arrangement of example 10, wherein each of the pair of bushings (108, 208) is positioned at a longitudinal center of the first surface of the respective battery module.

Example 12. The battery arrangement of any one of the preceding examples, wherein at least one of the battery suspension elements comprises a chassis bushing (120, 220) configured to be connected between the respective battery module (102, 202) and the frame (300) of the vehicle (10).

Example 13. The battery arrangement of example 12, wherein the chassis bushing (120, 220) is configured to be connected between an upper portion (122, 222) of the respective battery module (102, 202) and the frame (300) of the vehicle (10).

Example 14. The battery arrangement of any one of the preceding examples, wherein at least one of the battery suspension elements (104, 204) comprises an S-shaped spring member (124, 224) configured to flexibly connect the respective battery module (102, 202) to the frame (300) of the vehicle.

Example 15. The battery arrangement of example 14, wherein the S-shaped spring member (124, 224) is configured to provide a semi-rigid connection that allows limited movement of the battery module relative to the frame of the vehicle.

Example 16. The battery arrangement of any one of the preceding examples, wherein each of the battery modules comprises at least one pair of battery suspension elements.

Example 17. The battery arrangement of example 16, wherein the pair of battery suspension elements (104, 204) is longitudinally spaced apart from each other.

Example 18. The battery arrangement of any one of the preceding examples, wherein each of the battery modules (102, 202) has an L-shaped cross-section.

Example 19. A vehicle (10) comprising the battery arrangement according to any one of examples 1 - 18.

Example 20. The vehicle of example 19, wherein the frame (300) comprises a pair of longitudinally extending frame rails (303, 304), the battery arrangement being suspended from one of the pair of longitudinally extending frame rails.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery arrangement (100) for a vehicle (10), the battery arrangement comprising:
- a pair of battery modules (102, 202) arranged side by side and spaced apart from each other by a geometric gap (103), wherein each of the battery modules comprises a battery suspension element (104, 204) configured to individually suspend the respective battery module to a frame (300) of the vehicle,
- a protection plate (400) extending across the geometric gap and arranged at a first surface (106, 206) of each of the battery modules, the first surface being arranged laterally offset from the battery suspension elements (104, 204) of the battery modules, and
- a pair of bushings (108, 208), each bushing of the pair of bushings being arranged between the protection plate and the first surface of a respective one of the pair of battery modules, connecting the protection plate to the respective battery module, wherein each of the pair of bushings (108, 208) is formed by an elastomeric material to allow a relative movement between the protection plate and the battery modules.

2. The battery arrangement of claim 1, wherein each bushing of the pair of bushings (108, 208) is configured to allow a larger relative movement between the protection plate and the battery modules in a vertical direction (105) than in a longitudinal direction (101).

3. The battery arrangement of claim 2, wherein at least one bushing of the pair of bushings (108, 208) has an elongated shape with a greater dimension extending in the longitudinal direction (101) than in the vertical direction (105).

4. The battery arrangement of any one of claims 2 - 3, wherein at least one bushing of the pair of bushings (108, 208) has an oval shape with a major axis (201) extending in the longitudinal direction (101) and a minor axis (205) extending in the vertical direction (105).

5. The battery arrangement of any one of claims 2 - 4, wherein at least one bushing of the pair of bushings (108, 208) comprises an asymmetrical internal structure (109), such that the stiffness of the bushing is greater in the longitudinal direction (101) than in the vertical direction (105).

6. The battery arrangement of claim 5, wherein at least one bushing of the pair of bushings (108,208) comprises internal voids or cavities (110) arranged to reduce stiffness in the vertical direction (105) while restricting deformation in the longitudinal direction (101).

7. The battery arrangement of any one of claims 5 or 6, wherein at least one bushing of the pair of bushings (108, 208) comprises at least one reinforcing rib or layer (112) extending in the longitudinal direction (101) to limit deformation in the longitudinal direction.

8. The battery arrangement of any one of the preceding claims, wherein each of the pair of bushings (108, 208) is positioned at the same location in the lateral direction (103) between the crash shield (400) and the respective battery module (102, 202).

9. The battery arrangement of any one of the preceding claims, wherein each bushing of the pair of bushings is positioned in the vicinity of a vertical edge (116, 216) located at a longitudinal end of the respective battery module (102, 202).

10. The battery arrangement of any one of the preceding claims, wherein each of the pair of bushings (108, 208) is positioned along the first surface (106, 206) at a distance from a vertical edge located at a longitudinal end of the respective battery module.

11. The battery arrangement of claim 10, wherein each of the pair of bushings (108, 208) is positioned at a longitudinal center of the first surface of the respective battery module.

12. The battery arrangement of any one of the preceding claims, wherein at least one of the battery suspension elements comprises a chassis bushing (120, 220) configured to be connected between the respective battery module (102, 202) and the frame (300) of the vehicle (10).

13. The battery arrangement of any one of the preceding claims, wherein at least one of the battery suspension elements (104, 204) comprises an S-shaped spring member (124, 224) configured to flexibly connect the respective battery module (102, 202) to the frame (300) of the vehicle.

14. The battery arrangement of claim 13, wherein the S-shaped spring member (124, 224) is configured to provide a semi-rigid connection that allows limited movement of the battery module relative to the frame of the vehicle.

15. A vehicle (10) comprising the battery arrangement according to any one of claims 1 - 14.
